# EUROPEAN PATENT APPLICATION

(11) **EP 4 737 845 A2**
(43) Date of publication of application: **06.05.2026**
(21) Application number: 26163612.0
(22) Date of filing: 25.07.2023
(51) Int. Cl.: G01B 7/14

(54) **SLEW BEARING WITH LOAD MONITORING**

(30) Priority: 26.07.2022 NL 2032602
(62) Divisional of application: 23745209.9
(71) Applicant: Itrec B.V., 3115 HH Schiedam (NL)
(72) Inventor: ROMEIJN, Eric, 3115 HH SCHIEDAM (NL)
(74) Representative: EP&C

(57) **Abstract**

A slew bearing for rotatably supporting an object on a base about a slew axis. The slew bearing comprises a stationary ring and a rotary ring part. The stationary ring part is provided with a stationary raceway member forming a stationary raceway surface oriented substantially perpendicular to the slew axis. The rotary ring part is provided with a rotary raceway member forming a rotary raceway surface. Rolling elements are provided between the stationary raceway surface and the rotary raceway surface. The slew bearing further comprises an elastically compressible resilient insert sandwiched either between the rotary raceway member and the rotary ring part or between the stationary ring part and the stationary raceway member. The slew bearing further comprises an axial load sensor for monitoring an axial load on the slew bearing by measuring a distance over the resilient insert.

## Description

The invention relates to a slew bearing for rotatably supporting an object on a base about a slew axis. For example, the slew bearing supports a crane or a crane part. The slew bearing could also support an excavator, e.g. a backhoe dredger. The base can, for example, be embodied as a tub, a column, or a pedestal.

The invention further relates to a crane or backhoe dredger provided with the slew bearing, a vessel comprising the crane or backhoe dredger, and to a method for hoisting an object with the crane on the vessel.

For example, WO2008088213A2 describes a hoisting crane comprising a vertical column, a jib, and a jib connection member to which the jib is connected pivotably. The crane further comprises a slew bearing extending around the column and carrying the jib connection member rotatable about the column.

For example, in WO2019027325A1 the slew bearing comprises an elastically compressible resilient insert containing a plastic material, which insert is sandwiched between the rotary raceway member and the rotary ring part, so that the rotary ring part is resiliently supported on the rollers of the slew bearing via the rotary raceway member and the resilient insert.

Axial load components on the slew bearing arise from the weight of the crane or crane part, and loads applied to the crane when performing a hoisting operation. When performing a hoisting operation, not only axial load components arise, but also radial load components and momentum loads. When hoisting a load with a slewable hoisting crane, e.g. the crane of WO2008088213A2 or WO2019027325A1, the heavy load is supported by the crane offset from the center of the slew bearing and that causes the slew bearing to experience axial, radial, and momentum loads which are unevenly distributed over the slew bearing. During slewing of the crane, e.g. with the load to be lifted suspended from the crane, the load distribution on the slew bearing also moves along with the slew motion.

Systems are known to monitor load(s) acting on a slew bearing. For example, EP1528356B discloses a slew bearing and a monitoring apparatus for monitoring the slew bearing. The monitoring apparatus comprises sensors for detecting relative movements of the bearing rings with respect to each other. In particular, the tilting of the bearing rings can be monitored or determined on the basis of determined radial and axial movements. The sensors are non-contact displacement sensors which may be aligned radially and scan peripheral surfaces of the bearing rings, with the two sensors being arranged inside a bearing ring with the head of the sensors arranged in the sealed bearing gap of the slew bearing.

A downside of known slew bearings and accompanying monitoring solutions is that they are susceptible to breaking or malfunctioning during use. For example, the system of EP1528356B performs the measurements using non-contact displacement sensors provided in one bearing ring to measure through the bearing gap to the other bearing ring. In practice, the bearing gap is partly filled with oil, grease and/or other products (e.g. contaminants from outside and/or (metallic) particles due to wear) which may prevent the sensors from functioning properly.

It is an object of the invention to provide an improved slew bearing. It is a further object of the invention to provide a slew bearing that allows for an improved monitoring of load on the slew bearing. It is a further object of the invention to provide an alternative slew bearing.

The invention provides a slew bearing according to claim 1.

The slew bearing is configured for rotatably supporting an object on a base about a slew axis. For example, the object is a crane or a part of a crane, e.g. a crane boom or jib.

For example, the base may be mounted on the hull of a vessel so that the slew bearing may be used to support a crane on a vessel for use in offshore operations.

The base may further be provided on the shore, e.g. on a vehicle or on the ground, for supporting a crane, via the slew bearing, for onshore operations.

The base, preferably, is a circular base having similar circular dimensions to the slew bearing.

The slew bearing, for example, may have an inner diameter of more than 5 meters, e.g. more than 10 meters, e.g. more than 15 meters, e.g. more than 20 meters.

The slew bearing comprises:
- a stationary ring part connected or connectable to the base, and
- a rotary ring part connected or connectable to the object which is rotatable around the slew axis.

The stationary ring part is configured to remain stationary relative to the base to which the stationary ring part is connected or connectable. The rotary ring part is configured to be rotatably relative to the base to which the stationary ring part is connected or connectable. Thus the rotary ring part is configured to rotate relative to the stationary ring part, for example to allow a crane, supported by the rotary ring part, to be rotatable, around the slew axis.

In practical embodiments, the rotary ring part is provided with circumferentially arranged gear teeth that can mesh with a pinion of a slew drive for slewing the rotary ring part and any object supported thereon.

Preferably, the stationary ring part and the rotary ring part are manufactured from a steel material, e.g. a CrMo alloy steel.

The raceway members are, preferably, manufactured from another metal than the rest of the stationary ring part and the rotary ring part. The raceway members may be made from a metal that is suitable for contact with the rolling elements, e.g. (cylindrical) rollers and movement relative to the rollers.

For example, the raceway members may be made from hardened steel or from the steel material commercially available under the trademark Hardox.

Rolling elements, e.g. rollers, e.g. cylindrical rollers, are provided between the stationary raceway member and the rotary raceway member to allow the rotary ring part to rotate relative to the stationary ring part and to support the rotary ring part. For example, multiple rolling elements are arranged in a cage, with multiple cages being arranged in series between the raceway members.

The slew bearing further comprises an elastically compressible resilient insert, e.g. containing a plastic material, which is sandwiched between either the rotary raceway member and the rotary ring part, so that the rotary ring part is resiliently supported on the rollers via the rotary raceway and the resilient insert, or between the stationary ring part and the stationary raceway member, so that the rotary ring part is resiliently supported on the rollers via the resilient insert and the stationary raceway.

For example, in case the resilient insert is sandwiched between the rotary raceway member and the rotary ring part, the rotary raceway member may move slightly, e.g. as a result of a load applied on the slew bearing, relative to the first rotary ring part because the resilient insert is elastically compressible. Similarly, in case the resilient insert is sandwiched between the stationary raceway member and the stationary ring part, allows the stationary raceway member to move slightly relative to the stationary ring part.

The slew bearing further comprises at least one, preferably multiple, axial load sensor(s) for monitoring axial load on the slew bearing by either measuring a distance between the rotary ring part and the rotary raceway over the resilient insert or by measuring a distance between the stationary ring part and the stationary raceway member over the resilient insert. In other words, the axial load sensor is configured for monitoring an axial load on the slew bearing by measuring the distance between the rotary ring part and the rotary raceway member through the resilient insert. In this setup, the axial load sensor does not directly measure the distance between the stationary ring part and the rotary ring part. The axial load sensor also does not come in contact with a gap between the stationary ring part and the rotary ring part, which reduces the probability of malfunctioning of the axial load sensor.

Effectively, the axial load sensor is configured to determine an axial load on the slew bearing by measuring the local compression of the resilient insert, by measuring the distance between the components of the slew bearing between which the resilient insert is sandwiched. This gives a measure of the local axial load on the slew bearing because the rotary surface and the stationary surface are perpendicular to the slew axis and the raceway member may move parallel to the direction of the slew axis when the resilient insert is compressed.

In embodiments, the axial load sensor is configured to measure the distance by measuring on the basis of an electromagnetic field, e.g. like an inductive proximity sensor, the local compression of the resilient insert, by measuring the distance between the components of the slew bearing between which the insert is sandwiched.

In other embodiments, the axial load sensor is a mechanical contact sensor extending through the insert, e.g. via a bore through the insert, and configured to measure the local compression of the resilient insert, by measuring the distance between the components of the slew bearing between which the insert is sandwiched.

In embodiments, the axial load sensor is configured to measure the distance by measuring the local compression of the resilient insert, by measuring the distance between the components of the slew bearing between which the insert is sandwiched by sending a signal through the resilient insert and receiving a reflected signal.

In embodiments, multiple axial load sensors are provided on the slew bearing to determine the axial load at multiple positions around the circumferential extension of the bearing, thus providing more information on the axial load on the slew bearing. For example, axial load sensors are arranged at regular intervals around the circumferential extension of the bearing, e.g. 10 or more sensors, e.g. more than 20 sensors, e.g. spaced between 10 and 100 centimetres apart.

By providing the axial load sensor(s) in the slew bearing according to the invention, the axial load may be determined accurately with a system that is not influenced by effects, such as dirt or grease (e.g. including metallic particles) present between the rotary ring part and the stationary ring part. Further the system is a robust system because the axial load sensor(s) is/are not in contact with the (grease filled) gap between the bearing part surfaces that are rotating with respect to each other.

In embodiments, for supporting radially directed loads between the rotary ring part and the stationary ring part, the slew bearing further comprises an elastically compressible resilient slide ring, e.g. containing a plastic material, mounted to either the rotary ring part or the stationary ring part and sliding along a second stationary surface of the stationary ring part or along a second rotary surface of the rotary ring part,
wherein the slew bearing further comprises a radial load sensor for monitoring a radial load on the slew bearing by measuring a distance between the rotary ring part and stationary ring part through the slide ring,
wherein the radial load sensor is configured to measure the distance between the rotary ring part and the stationary ring part through the slide ring based on a measurement of a field.

In embodiments, the radial load sensor is configured to measure the distance by measuring on the basis of an electromagnetic field, e.g. like an inductive proximity sensor.

The elastically compressible resilient slide ring may be mounted in the slew bearing substantially vertical, so parallel to a vertical slew axis. Movement of the rotary ring part relative to the stationary ring part, e.g. as a result of hoisting a load, may result in radial loads being applied. The elastically compressible resilient slide ring may be made from the same material as the elastically compressible resilient insert as discussed herein. When a radial load is applied the resilient slide ring is compressed due to the forces acted thereon by the rotary and stationary ring parts. By measuring the compression of the slide ring with the radial load sensor a measure of the radial load is obtained.

The invention also relates to a slew bearing according to claim 4.

For supporting radially directed loads between the rotary ring part and the stationary ring part, the slew bearing comprises an elastically compressible resilient slide ring, e.g. containing a plastic material, mounted to either the rotary ring part or the stationary ring part and sliding along a stationary surface of the stationary ring part or along a rotary surface of the rotary ring part,
wherein the slew bearing further comprises a radial load sensor for monitoring a radial load on the slew bearing by measuring a distance between the rotary ring part and stationary ring part through the slide ring,
wherein the radial load sensor is configured to measure the distance between the rotary ring part and the stationary ring part through the slide ring based on a measurement of a field.

The slew bearing may be provided with multiple radial load sensors to measure the radial load at various circumferential locations of the slew bearing.

By providing the radial load sensor according to the invention, the radial load may be determined accurately with a system that is not (unduly) influenced by outside effects, such as dirt or grease present between the rotary ring part and the stationary ring part. Further the system is a robust system because the axial load sensor does not have to be in contact with surfaces that are rotating with respect to each other.

In embodiments, the slew bearing comprises both radial and axial load sensors as discussed herein.

In embodiments, the resilient insert is sandwiched between the rotary raceway member and the rotary ring part, wherein the axial load sensor is provided in the rotary ring part, adjacent to the resilient insert, and opposite the rotary raceway member relative to the resilient insert.

This allows the axial load sensor to be provided inside a bulk of the rotary ring part, thus protecting the sensor from outside influences.

In embodiments, the slide ring is provided on the stationary ring part and the radial load sensor is provided in the rotary ring part, adjacent to the slide ring. This allows the radial load sensor to be provided inside a bulk of the rotary ring part, thus protecting the sensor from outside influences.

In embodiments the axial load sensor is configured to measure the distance by measuring the local compression of the resilient insert by measuring the distance between the components of the slew bearing between which the insert is sandwiched by sending a signal through the insert and receiving a reflected signal,

In embodiments, the radial load sensor is configured to measure the distance between the rotary ring part and the stationary ring part through the slide ring by sending a signal through the slide ring to the opposing surface and receiving a reflected signal.

In embodiments, the rolling elements are rollers, e.g. cylindrical rollers. Rollers are suitable rolling elements for a slew bearing supporting heavy loads, such as a crane. In other embodiments, the rolling elements can be balls.

In embodiments, the slew bearing comprises multiple axial load sensors for monitoring an axial load on the slew bearing by either measuring a distance between the rotary ring part and the first rotary raceway over the resilient insert or by measuring a distance between the stationary ring part and the first stationary raceway over the resilient insert, wherein the multiple axial load sensors are distributed on a circumferential extension of the slew bearing around the slew axis,
and/or wherein the slew bearing comprises multiple radial load sensors for monitoring a radial load on the slew bearing by measuring a distance between the rotary ring part and stationary ring part through the slide ring, wherein the multiple radial load sensors are distributed around the circumferential extension of the slew bearing around the slew axis. This embodiment allows to measure the axial and/or radial load around the circumferential extension of the angular slew bearing. In this way the load may be monitored around the circumferential extension of the bearing when a crane is supporting a load and rotating the load. This allows to monitor locations along the circumferential extension that experience peak loads, independent of the location of the peak load along the circumferential extension.

In embodiments, the resilient insert(s) and/or the slide ring(s) are made of a composite material, e.g. a fiber reinforced plastic material. For example, the resilient insert(s) and/or slide ring(s) may be made of Orkot (brand name).

In embodiments, the rotary ring part comprises a recess inside which the rotary raceway member is contained.

In embodiments, the stationary ring part is provided with a second stationary raceway member forming a second stationary raceway surface that is oriented substantially perpendicular to the slew axis, and wherein the rotary ring part is provided with a second rotary raceway member forming a second rotary raceway surface,
wherein rolling elements, e.g. rollers, are provided between the second stationary raceway member and the second rotary raceway member,
wherein the slew bearing further comprises a second elastically compressible resilient insert , e.g. containing a plastic material, which is sandwiched between either the second rotary raceway member and the rotary ring part, so that the rotary ring part is resiliently supported on the rollers via the second rotary raceway member and the second resilient insert, or the stationary ring part and the second stationary raceway member , so that the rotary ring part is resiliently supported on the rollers via the second resilient insert and the second stationary raceway member.

In embodiments, for supporting radially directed loads between the rotary ring part and the stationary ring part, the slew bearing further comprises a second elastically compressible resilient slide ring, e.g. containing a plastic material, mounted to either the rotary ring part or the stationary ring part and sliding along a stationary surface of the stationary ring part or along a rotary surface of the rotary ring part .

In embodiments, a fourth stationary surface is oriented substantially parallel to the slew axis and is arranged opposite a fourth rotary surface,
wherein the slew bearing further comprises a second elastically compressible resilient glide ring, e.g. containing a plastic material, which is provided either on the fourth stationary surface or on the fourth rotary surface to support radially inwards directed loads between the rotary ring part and the stationary ring part.

In embodiments, the axial load sensor is configured to measure the distance between the rotary ring part and the first rotary raceway over the resilient insert or the distance between the stationary ring part and the first stationary raceway over the resilient insert by sending a signal through the resilient insert to the opposing surface and receiving a reflected signal.

The invention is further related to a crane or backhoe dredger rotatably supported on a base by a slew bearing according to the invention.

The invention is further related to a vessel comprising a crane having an annular bearing according to the invention, wherein the vessel is configured to perform offshore hoisting operations.

The invention is further related to a method for hoisting an object on a vessel with a crane, wherein use is made of a vessel according to the invention.

In embodiments of the method, the method comprises:
- hoisting an object with the crane mounted to the vessel;
- monitoring the radial load and/or the axial load on the slew bearing with the radial load sensor and the axial load sensor; and
- optionally, providing a warning signal when the axial load and/or the radial load exceeds a predetermined threshold value.

The second aspect of the invention aims to provide an improved assembly for supporting an object on a rail, that is configured for monitoring a load on the assembly.

The second aspect of the invention relates to an assembly for supporting an object on a rail whilst the object moves along the rail, wherein the assembly comprises a load bearing housing for carrying the object,
wherein the assembly comprises an endless chain of rolling elements, which are arranged for recirculating along a closed path around a raceway member and a central body of the assembly which central body is attached to or integral with the load bearing housing, the path including:
   - a work portion defined by a flat load bearing surface of the raceway member of the assembly, in which work portion an operative set of the rolling elements engages the rail, and
   - a return portion defined by a return surface of the central body of the assembly in which a remaining set of the rolling elements is free from the rail, e.g. the return portion having a section which is parallel to the work portion,
wherein the assembly comprises an elastically compressible resilient insert, e.g. containing a plastic material, which resilient insert is sandwiched between the central body and the raceway member above the work portion, so that the central body is resiliently supported on the operative set of the rolling elements via the insert and the raceway member,
wherein the assembly further comprises a load sensor for monitoring a load on the assembly by measuring a distance between the central body and the raceway member through the resilient insert, wherein the load sensor is provided in the central body, e.g. opposite the raceway member relative to the resilient insert.

When the assembly of the second aspect is used in conjunction with the X-Y motion support of a pile holder, as in preferred embodiments of the second aspect of the invention, an advantage is that the effective height of the X-Y motion support for the pile holder can be reduced as no longer use is made of large diameter wheels for this purpose. This improves stability of the support of the load on the vessel and of the vessel including the load, e.g. so that control of the positioning thereof becomes easier. Furthermore, the rails are no longer subject to unfavourable localized mechanical loading at the relatively small interface between a wheels and the rail. This may allow to reduce the requirements on the mechanical properties of the rails. Also, compared to the known arrangement of large diameter wheels, the inventive assembly may provide a smooth movement of the load along the rails. For example, stick-slip effects may be reduced to the benefit of control of accurate dynamic positioning of the pile holder, which becomes increasingly more challenging as the weight to be handled (e.g. of the pile) is larger.

The rail may be mounted or mountable to a surface, e.g. on top thereof, e.g. on a vessel, e.g. to a deck thereof, whilst the object is able to move along the rail. The rail may be mounted to the surface via another such rail. The rail may alternatively be mounted or mountable to extend sideways, or be suspended to support the object from above. The term 'on' is to be interpreted to include such configurations.

The assembly comprises a load bearing housing for carrying the object on the assembly, e.g. for mounting the object to the assembly. By carrying the object, and engaging with the rail, the assembly supports the object on the rail. In embodiments, the assembly is suitable for supporting the object on multiple rails, for example two parallel rails.

The assembly comprises an endless chain of steel rolling elements, which are arranged for recirculating along a closed path defined by the assembly. For example, between 20 and 25 rolling elements are arranged in the endless chain. The chain is formed by a row of the steel rolling elements, the rotation axes thereof being parallel to each other, as is known in the art.

For example, the rolling elements may be physically interconnected, or push each other forward via intermediate elements between adjacent rollers.

The closed path runs around a raceway member and a central body. Thus the raceway member and the central body form an inner circumference of the closed path. The path includes a work portion and a return portion. The work portion is defined by a load bearing surface of the raceway member of the assembly, in which work portion an operative set of the rolling elements engages the rail. Thereby, the work portion supports the load of the object on the rail. The load bearing surface is generally smooth, and the raceway member having this surface is non-resilient, as it is made of steel. The rolling elements also being made of steel, makes that friction between the rolling elements and the load bearing surface is minimized. In the return portion, defined by a return surface of the central body, a remaining set of the rolling elements is free from the rail. Thus, no rolling elements of the remaining set engage the rail, and thus support the object on the rail. This may be achieved by having the return surface run, at a front and rear side of the load bearing surface, directly upwards from the load bearing surface. In an example the return portion has a section which is parallel to the work portion.

In operation, that is, when the object and the assembly moves in a longitudinal direction of the rail, the operative set of the rolling elements moves along the work portion of the closed path in the opposite direction of this movement direction. In doing so, the rolling elements roll over the rail and over the load bearing surface. In the return portion of the closed path, the rolling elements move from the side of the work portion where the rolling elements exit the work portion, along the return portion to the side of the work portion where the rolling elements enter the work portion. In doing so, the rolling elements roll over the return surface.

A practical shape of the closed path has a work portion that runs longitudinally along a plurality of rolling elements, for example 6 - 10 rolling elements, and runs along a top surface of the rail when the assembly engages with the rail, and has a straight part of the return portion, e.g. of equal length, that is above and parallel to the work portion. The straight part of the return portion and the work portion may be interconnected by semi-circular front and back portions of the closed path. Or, for example, the closed path is in the shape of a rounded rectangle with the long sides being formed by the work portion and the straight part of the return portion.

The engagement of the rail by the assembly may be only from above, however it is preferred that the assembly limits also the movement of the assembly with respect to the rail in the lateral direction of the rail. In an embodiment, the rolling elements may be slightly concave. The lateral movement relative to the rail may, for example, also be limited by providing one or more elements, e.g. rollers or wheels with a vertical rotation axis, which engage the rail laterally. These may be mounted to or integral with the assembly.

The rolling elements may have a hardened surface to further reduce friction at the interfaces thereof with the rail and the load bearing surface.

According to the second aspect of the invention, the assembly comprises an elastically compressible resilient insert between the central body and the steel raceway. The central body is resiliently supported via the insert on the operative set of the rolling elements.

The insert may, for example, be an elastically compressible resilient plate, on top of which the load bearing body is attached.

The central body is, preferably, attached to the resilient insert directly on top thereof.

Rather than monitoring a load on the rollers, the assembly is configured to monitor the load on the resilient insert. Effectively, the load sensor of the assembly is configured to determine a load on the central body by measuring the local compression of the resilient insert, by measuring the distance between the central body and the raceway member through the resilient insert. This gives a measure of the local load on the assembly. Thus, the assembly of the second embodiment allows for robust load sensing that is less prone to malfunction because the load sensor is not in contact with the closed path which may contain dirt or grease. Further, the sensor may be fully embedded in the steel body, providing a protect casing for the sensor.

In embodiments of the second aspect, the resilient insert is made of a composite material, e.g. a fiber reinforced plastic material.

In embodiments of the second aspect, the raceway member and/or the resilient insert are each embodied in the form of a plate.

The raceway member and the resilient insert may be each embodied in the form of a plate, and the raceway member may have a smaller thickness than, e.g. corresponding to around 55 - 65% of a thickness of the raceway member.

In embodiments of the second aspect, the central body comprises a recess inside which the resilient insert and the raceway element are contained and axially enclosed, e.g. such that the raceway element is flush with the longitudinally adjacent return surface of the central body.

In embodiments of the second aspect, at a front and rear side of the load bearing surface, the return surface runs upwardly directly from the load bearing surface, preferably wherein a frontmost and/or rearmost section of the raceway member slants slightly upwards towards the return surface.

In embodiments of the second aspect, the assembly further comprises a second endless chain of linear recirculating rolling elements, arranged for recirculating along a second closed path defined by the assembly, the two paths being laterally juxtaposed and parallel to one another, the second path including a work portion that is defined by a second load bearing surface of a second raceway member and in which an operative set of the rolling elements engages the rail, and a return portion that is defined by a second return surface of the central body and in which a remaining set of the rolling elements is free from the rail, wherein the central body is resiliently supported on the respective operative portions of the rolling elements of both endless chains via the respective raceway members, a elastically compressible resilient slide ring, e.g. containing a plastic material, being sandwiched between the central body and the second raceway member.

In embodiments of the second aspect, the housing is provided, at least around the work portion of the recirculating rolling elements, with one or more seals, e.g. between one or more bottom surfaces of the assembly, e.g. bottom surfaces of walls of the assembly, which together axially enclose the work portion, and the upper surface of the rail,
wherein the seals, e.g. together with the walls, define between the load bearing surface and the upper surface of the rail a grease chamber for the operative set of the recirculating rolling elements, e.g. wherein the seals are in a cross-section thereof substantially V-shaped.

In embodiments of the second aspect, the housing is provided at a front and/or rear side, facing a longitudinal direction of the rail, and at a longitudinal distance from the work portion, with respectively one or more front and/or rear scrapers or brushes, engaging the upper surface of the rail for cleaning the rail.

In embodiments of the second aspect, the housing comprises a front and rear vertical end wall which extend laterally respectively at the front and rear side of the assembly, and a front and rear guide wall which are attached to respectively the front and rear end wall and define respectively a front and rear section of the return portion of the closed path opposite the return surface, e.g. wherein the attachment is established via one or more elongate mounting elements, e.g. one or more bolts, screws or similar, which extend perpendicularly through the end walls and longitudinally protrude into the guide walls.

In embodiments of the second aspect, the housing comprises a second front guide wall and a second rear guide wall, which are attached to respectively the front and rear end wall and define respectively a front and rear section of the return portion of the second closed path opposite the second return surface.

In embodiments of the second aspect, the housing further comprises a front and/or rear frame which protrude respectively from the front and/or rear end wall in a frontward and/or rearward direction, wherein the front and/or rear scraper is mounted underneath the respective frame at a longitudinal end thereof.

In embodiments of the second aspect, the rolling elements each rotate around a respective roller axis of which head ends run over respective treads formed by vertical protrusions from the central body extending longitudinally along the closed path at respective lateral sides of the closed path.

In embodiments of the second aspect, the assembly further comprises left upper and lower and right upper and lower longitudinal wall parts which form upper and lower vertical protrusions from the central body at the left and right ends thereof, and which extend longitudinally over at a least length of the closed path, e.g. wherein the left upper and lower longitudinal wall parts are interconnected, and the right upper and lower longitudinal wall parts are interconnected, via one or more elongate mounting elements, e.g. one or more bolts, screws or similar, which vertically extend inside the respective upper and lower longitudinal wall parts and through the respective lateral end of the central body, e.g. multiple elongate mounting elements being distributed longitudinally along the wall parts.

In embodiments of the second aspect, the assembly further comprises intermediate upper and lower longitudinal wall parts which form upper and lower vertical protrusions from the central body in between the two closed paths, and which extend longitudinally over at least a length of the closed path, e.g. wherein the intermediate upper and lower longitudinal wall parts are interconnected via one or more elongate mounting elements, e.g. one or more bolts, screws or similar, which vertically extend inside the respective upper and lower longitudinal wall parts and through a central part of the central body, e.g. multiple elongate mounting elements being distributed longitudinally along the wall parts.

In embodiments of the second aspect, the longitudinal wall parts are connected to the end walls via one or more elongate mounting elements which extend perpendicularly through the end walls and longitudinally protrude into the longitudinal wall parts.

In embodiments of the second aspect, the assembly comprises multiple load sensors for monitoring a load on the assembly by measuring a distance between the central body and the raceway member, wherein the multiple axial load sensors are distributed on the central body.

The invention will now be illustrated with reference to the drawing, wherein:
Fig. 1 shows in cross-section a crane equipped with a slew bearing,
Fig. 2 shows in more detail a part of a first embodiment of the slew bearing;
Fig. 3 shows a cross section of a part of a second embodiment of a slew bearing; and
Fig. 4 shows a cross section of an assembly according to the second aspect of the invention.

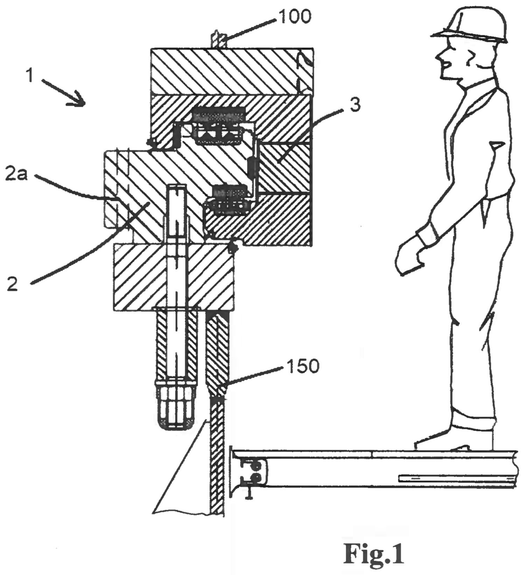

The slew bearing 1 is configured for rotatably supporting an object 100, here a slewable crane of an offshore vessel, on a base, here a crane tub 150, about a slew axis. The person shown in figure 1 is indicative for the size of the slew bearing 1 in this example. In this example, the person stands on the outside of the slew bearing 1.

The slew bearing 1 comprises a stationary ring part 2, of called nose part in the field, which is connected or connectable to the base 150, e.g. of a vessel.

The slew bearing 1 further comprises a rotary ring part 3 which is connectable or connected to a crane 100 or other object.

The crane 100, once mounted on the slew bearing 1, is rotatable around the slew axis by rotational movement of the rotary ring part 3 relative to the stationary ring part 2.

In practical embodiments, the part 2 has an internal (as shown here) or external gear section 2a formed by circumferentially arranged teeth that can mesh with a motor driven pinion to perform the slew motion.

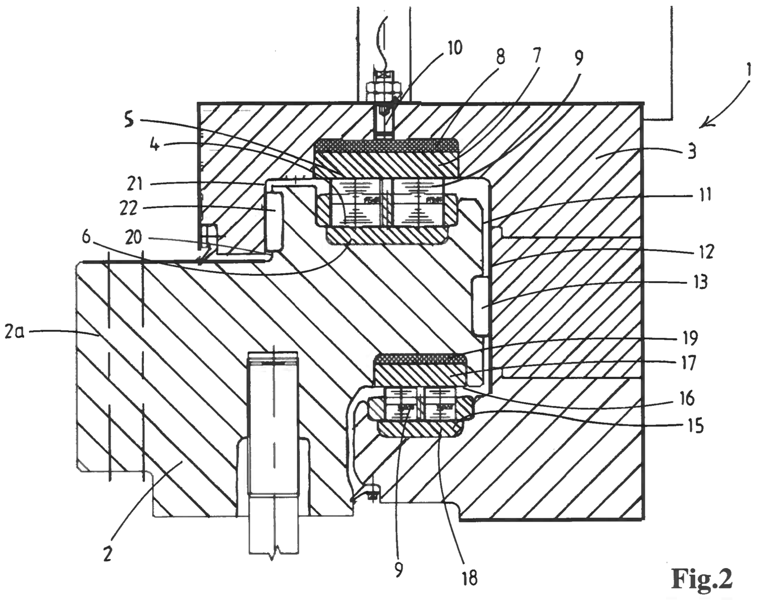

The slew bearing 1 is shown in more detail in figure 2.

A first stationary raceway surface 4 is oriented substantially perpendicular to the slew axis, which in figure 1 extends vertically as is common.

The first raceway stationary surface 4 is arranged opposite a first rotary raceway surface 5, parallel to the first stationary raceway surface 4.

The surface 4 is formed by a first stationary raceway member 6 and is contacted by rolling elements 9, e.g. rollers 9, e.g. cylindrical rollers 9, of the slew bearing.

The first rotary surface 5 is formed by a first rotary raceway member 7.

The rolling elements 9 are provided between the first stationary raceway member 6 and the first rotary raceway member 7.

The slew bearing 1 comprises a first elastically compressible resilient insert 8 which is sandwiched between the first rotary raceway member 7 and the rotary ring part 3, so that the rotary ring part 3 is resiliently supported on the rolling elements 9. In other embodiments the first insert 8 is sandwiched between the stationary ring part 2 and the first stationary raceway member 6, such that the rotary ring part 3 is resiliently supported on the rolling elements 9 via the resilient insert 8 and the first stationary raceway 6.

The resilient insert 8 may be made of a composite material, for example a fiber reinforced plastic material, for example Orkot (brand name).

The slew bearing 1 comprises an axial load sensor 10 provided in the rotary ring part 3 for monitoring an axial load on the slew bearing 1 by measuring a distance between the rotary ring part 3 and the first rotary raceway member 7 over the resilient insert 8. The distance is measured through the first insert 8 by the axial load sensor 10, e.g. by measuring a magnetic flux due to a change of position of the first rotary raceway member 7 relative to the load sensor 10 due to a compression of the insert 8. For example, the sensor 10 is embodied as an inductive proximity sensor.

In other embodiments, the load sensor 10 may be in mechanical contact with the first rotary raceway member 7 through the first insert 8 to measure the distance, e.g. the insert 8 having a corresponding hole through which the sensor 10 or part thereof extends.

In embodiments, the first insert 8 is sandwiched between the stationary ring part 2 and the first stationary raceway member 6, the load sensor 10 may be provided in the stationary ring part 2 to measure a distance between the stationary ring part 2 and the first stationary raceway member 6 over the first insert 8.

The slew bearing 1, as is preferred, comprises multiple axial load sensors 10 for monitoring an axial load on the slew bearing 1. The multiple axial load sensors 10 are distributed on a circumferential extension of the slew bearing 1 around the slew axis, e.g. more than 10 axial load sensors are provided in combination with a single raceway member of the slew bearing, e.g. more than 20 axial load sensors. This allows the load to be monitored around the circumferential extension, showing locations of peak load on the slew bearing 1, independent on the location of the peak load on the circumferential extension.

The axial load sensing may be done by either measuring a distance between the rotary ring part 3 and the first rotary raceway member 7 over the resilient insert 8 or by measuring a distance between the stationary ring part 2 and the first stationary raceway 6 over the resilient insert 8.

The slew bearing 1 shown in figure 1 further comprises an elastically compressible resilient slide ring 13, e.g. made from the same material as the first insert 8, which is mounted to a vertical surface 11 of the ring part 2. A rotary surface 12 of the ring part 3 slides along this slide ring 3 in order to support radially directed loads between the stationary ring part 2 and the rotary ring part 3.

The slew bearing 1 shown in figure 1 further comprises a second stationary surface 16 formed by a second stationary raceway member 17 which is oriented perpendicular to the slew axis.

A second rotary raceway member 18 forms a second rotary surface 15 which is provided on the rotary ring part 3.

Rolling elements 9, e.g. rollers 9, are provided between the second stationary raceway member 17 and the second rotary raceway member 18.

The slew bearing 1 as shown here, may also comprise a second elastically compressible resilient insert 19, e.g. manufactured from the same material as the first insert 8, which is sandwiched between the second stationary raceway member 17 and the stationary ring part 2.

One or, preferably, more second axial load sensors may be provided to measure distance between the second stationary raceway member 17 and the stationary ring part 2 across the insert 19.

The slew bearing 1 of figure 2 further comprises a stationary surface 20 on the stationary ring part 2 which is oriented parallel to the slew axis. The stationary surface 20 is arranged opposite a rotary surface 21 which is provided on the rotary ring part 3.

An elastically compressible second slide ring 22 is provided between surfaces 20, 21 in order to support radially directed loads between the rotary ring part 3 and the stationary ring part 2.

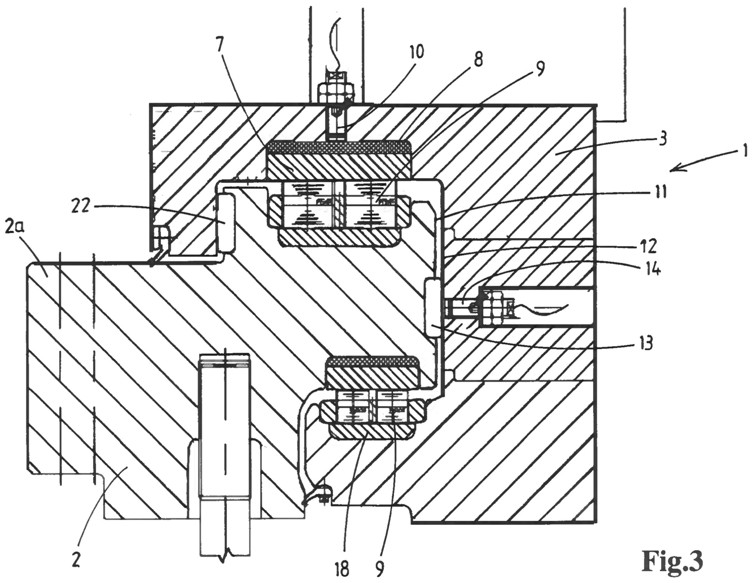

Figure 3 shows a different embodiment of the slew bearing 1 than figure 1, wherein like elements have the same reference numerals.

The slew bearing 1 shown in figure 3 further comprises one or more, preferably multiple, radial load sensors 14 for monitoring radial load on the slew bearing 1. The radial load is monitored by measuring a distance between the rotary ring part 3 and the stationary ring part 2 through the second insert 13. The distance is measured based on a measurement of a field, e.g. an electromagnetic field, a magnetic field, e.g. a magnetic flux, or a signal emitted by the load sensor and reflected towards the load sensor.

For example, the sensor 14 is an inductive proximity sensor.

In embodiments, the slew bearing 1 comprises multiple radial load sensors 14 for monitoring radial load on the slew bearing 1 by measuring a distance between the rotary ring part 3 and stationary ring part 2 through the slide ring 13, wherein the multiple radial load sensors 14 are distributed around the circumferential extension of the slew bearing 1 around the slew axis.

The slew bearings 1 shown in the figures may rotatably support a crane on a base. The base of the crane may be provided on a vessel such that the crane may be used for performing offshore activities such as hoisting an object.

For example the crane, e.g. provided on the vessel may be used in a method, comprising:
- hoisting an object with the crane mounted to the vessel;
- monitoring the radial load and/or the axial load on the slew bearing with the radial load sensor and the axial load sensor; and
- optionally, providing a warning signal when the axial load and/or the radial load exceeds a predetermined threshold value.

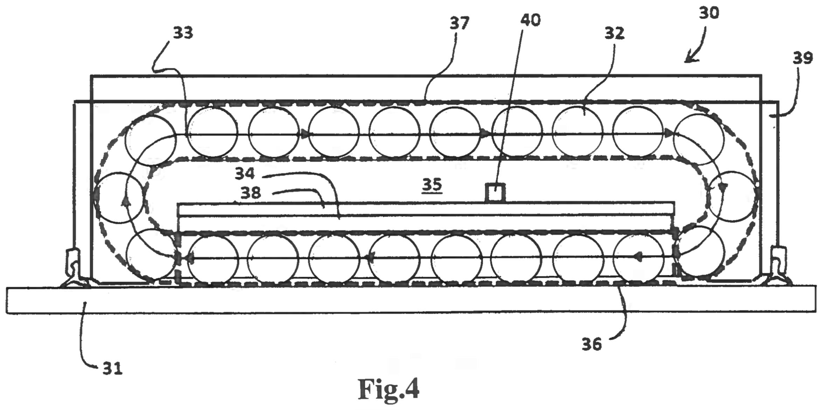

Figure 4 shows a cross section of an assembly 30 according to the second aspect of the invention. The assembly 30 is suitable for supporting an object on a rail 31 whilst the object moves along the rail, wherein the assembly 30 comprises a load bearing housing 39 for carrying the object.

The assembly 30 comprises an endless chain of rolling elements 32, for example a chain of cylindrical steel rollers 32, which are arranged for recirculating along a closed path 33 around a raceway member 34 and a central body 35 of the assembly 30. The central body is attached to or integral with the load bearing housing 39, not shown in the figure.

The closed path 33 includes a work portion 36 defined by a flat load bearing surface of the raceway member 34 of the assembly 30. In the work portion 36 an operative set of the rolling elements 32 engages the rail 31.

The closed path 33 further includes a return portion 37 defined by a return surface of the central body 35, e.g. a steel central body, of the assembly 30 in which a remaining set of the rolling elements 32 is free from the rail 31, e.g. the return portion 37 has a section which is parallel to the work portion 36 as in figure 3.

The assembly 30 further comprises an elastically compressible resilient insert 38, e.g. containing a plastic material, e.g. manufactured from the same material as the inserts of the first aspect of the invention, e.g. manufactured from Orkot (brand name). The resilient insert 38 is sandwiched between the central body 35 and the raceway member 34 above the work portion 36. This allows the central body 35 to be resiliently supported on the operative set of the rolling elements 32 via the insert 38 and the raceway member 34.

The assembly 30 further comprises a load sensor 40 for monitoring a load on the assembly 30, e.g. due to supporting the object thereon. The load sensor 40 monitors the load by measuring a distance between the central body 35 and the raceway member 34 through the insert 38. The distance varies as the insert 38 is compressed due to the load, making the distance a measure for the load applied on the assembly 30. The load sensor 40 is provided in the central body 35, e.g. opposite the raceway member 34 relative to the resilient insert 38. The load sensor 40 may eb embodied as discussed herein for the other load sensors, e.g. embodied as an inductive proximity sensor.

In embodiments, the assembly 30 comprises multiple load sensors 40 distributed over the central body 35 to measure the load thereon. This allows to monitor the load distributed over the assembly 30, giving a more complete picture of the load, e.g. of a peak load, during operations.

The rail 31 may be mounted or mountable to a surface, e.g. on top thereof, e.g. on a vessel, e.g. to a deck thereof, whilst the object is able to move along the rai 31l.

The assembly 30 comprises a load bearing housing 39 for carrying the object on the assembly 30, e.g. for mounting the object to the assembly. By carrying the object, and engaging with the rail 31, the assembly 30 supports the object on the rail 31 creating a load thereon. In embodiments, the assembly 30 is suitable for supporting the object on multiple rails 31, for example two parallel rails 31.

The assembly comprises an endless chain of steel rolling elements 32, which are arranged for recirculating along the closed path 33 defined by the assembly 30. For example, between 20 and 25 rolling elements 32 are arranged in the endless chain. The chain is formed by a row of the rolling elements 32, for example steel rolling elements 32, the rotation axes thereof being parallel to each other, as is known in the art.

For example, the rolling elements 32 may be physically interconnected, or push each other forward via intermediate elements between adjacent rolling elements 32.

In operation, that is, when the object and the assembly 30 moves in a longitudinal direction of the rail 31, the operative set of the rolling elements 32 moves along the work portion 36 of the closed path 33 in the opposite direction of this movement direction. In doing so, the rolling elements 32 roll over the rail 31 and over the load bearing surface. In the return portion 37 of the closed path 33, the rolling elements 32 move from the side of the work portion 36 where the rolling elements 32 exit the work portion 36, along the return portion 37 to the side of the work portion 37 where the rolling elements enter the work portion. In doing so, the rolling elements 32 roll over the return surface.

The assembly 30 is configured to monitor the load on the resilient insert 38 using the load sensor 40. Effectively, the load sensor 40 of the assembly 30 is configured to determine a load on the central body 35 by measuring the local compression of the resilient insert, by measuring the distance between the central body 35 and the raceway member 34 through the resilient insert 38. This gives a measure of the local load on the assembly 30. Thus, the assembly of the second embodiment allows for robust load sensing that is less prone to malfunction because the load sensor is not in contact with the closed path 33 which may contain dirt or grease. Further, the sensor 40 may be fully embedded in the steel body, providing a protect casing for the sensor. The load sensor 40 may measure the compression of the insert based on a magnetic flux, e.g. due to a displacement of a magnetized part of the raceway member 34, through reflection of a signal emitted by the load sensor 40 on the raceway member 34, via a direct contact between the load sensor 40 and the raceway member 40, or any other means.

Embodiments are described in the following clauses, wherein:
Clause 1. Slew bearing (1) for rotatably supporting an object (100) on a base about a slew axis, e.g. supporting a crane or crane part on a base (150), wherein the slew bearing (1) comprises:
   - a stationary ring part (2) connected or connectable to the base (150); and
   - a rotary ring part (3) connected or connectable to the object (100), which is rotatable around the slew axis,

   wherein the stationary ring part (2) is provided with a stationary raceway member (6) forming a stationary raceway surface (4) oriented substantially perpendicular to the slew axis,
   wherein the rotary ring part (3) is provided with a rotary raceway member (7) forming a rotary raceway surface (5),
   wherein rolling elements (9), e.g. rollers, e.g. rolling elements (9) in cages, are provided between the stationary raceway surface (4) and the rotary raceway surface (5), e.g. wherein the stationary raceway surface (4) is parallel to the rotary raceway surface (5),
   wherein the slew bearing (1) further comprises an elastically compressible resilient insert (8), e.g. containing a plastic material, which is sandwiched either between the rotary raceway member (7) and the rotary ring part (3), so that the rotary ring part (3) is resiliently supported on the rolling elements (9) via the rotary raceway member (7) and the resilient insert (8), or between the stationary ring part (2) and the stationary raceway member (6), so that the rotary ring part (3) is resiliently supported on the rolling elements (9) via the resilient insert (8) and the stationary raceway member (6),
   and wherein the slew (1) bearing further comprises an axial load sensor (10) for monitoring an axial load on the slew bearing (1) by either measuring a distance between the rotary ring part (3) and the first rotary raceway member (7) over the resilient insert (8) or by measuring a distance between the stationary ring part (2) and the first stationary raceway member (6) over the resilient insert (8).
Clause 2. Slew bearing according to clause 1, wherein the axial load sensor (10) is configured to measure the distance based on a measurement of a field, e.g. an electromagnetic field, e.g. the axial load sensor (10) being an inductive proximity sensor.
Clause 3. Slew bearing according to clause 1 or 2, wherein for supporting radially directed loads between the rotary ring part (3) and the stationary ring part (2), the slew bearing (1) further comprises an elastically compressible resilient slide ring (13), e.g. containing a plastic material, mounted to either the rotary ring part (3) or the stationary ring part (2) and sliding along a second stationary surface (11) of the stationary ring part (2) or along a second rotary surface (12) of the rotary ring part (3),
   wherein the slew bearing (1) further comprises a radial load sensor (14) for monitoring a radial load on the slew bearing (1) by measuring a distance between the rotary ring part (3) and stationary ring part (2) through the slide ring (13),
   wherein the radial load sensor (14) is configured to measure the distance between the rotary ring part (3) and the stationary ring part (2) through the slide ring (13) based on a measurement of a field.
Clause 4. Slew bearing (1) for rotatably supporting an object (100) on a base (150) about a slew axis, e.g. supporting a crane or crane part on a base (150), wherein the slew bearing (1) comprises:
   - a stationary ring part (2) connected or connectable to the base (150); and
   - a rotary ring part (3) connected or connectable to the object (100), which is rotatable around the slew axis,

   wherein for supporting radially directed loads between the rotary ring part (3) and the stationary ring part (2), the slew bearing (1) comprises an elastically compressible resilient slide ring (13), e.g. containing a plastic material, mounted to either the rotary ring part (3) or the stationary ring part (2) and sliding along a stationary surface (20) of the stationary ring part (2) or along a rotary surface (21) of the rotary ring part (3),
   wherein the slew bearing (1) further comprises a radial load sensor (14) for monitoring a radial load on the slew bearing (1) by measuring a distance between the rotary ring part (3) and stationary ring part (2) through the slide ring (13),
   wherein the radial load sensor (14) is configured to measure the distance between the rotary ring part (3) and the stationary ring part (2) through the slide ring (13) based on a measurement of a field, e.g. an electromagnetic field.
Clause 5. Slew bearing according to any one of clauses 1 - 3, wherein the resilient insert (8) is sandwiched between the rotary raceway member (7) and the rotary ring part (3), wherein the axial load sensor (10) is configured to measure a distance between the rotary ring part (3) and the rotary raceway member (7) over the resilient insert (8), and wherein the axial load sensor (10) is provided in the rotary ring part (3), adjacent to the resilient insert (8), and opposite the rotary raceway member (7) relative to the resilient insert (8).
Clause 6. Slew bearing according to clause 3 or 4, wherein the slide ring is (13) provided on the stationary ring part (2), and wherein the radial load sensor (14) is provided in the rotary ring part (3), adjacent to the slide ring (13).
Clause 7. Slew bearing according to one or more of the preceding clauses, wherein the axial load sensor (10) is configured to measure the distance by sending a signal through the resilient insert (8) and receiving a reflected signal,
   and/or
   wherein the radial load sensor (14) is configured to measure the distance by sending a signal through the slide ring (13) and receiving a reflected signal.
Clause 8. Slew bearing according to one or more of the preceding clauses, wherein the rolling elements (9) are rollers (9).
Clause 9. Slew bearing according to one or more of the preceding clauses, comprising multiple of said axial load sensors (10) for monitoring axial load distribution on the slew bearing (1) by each measuring a distance over the resilient insert (13), wherein the multiple axial load sensors (10) are distributed on a circumferential extension of the slew bearing (1) around the slew axis,
   and/or
   wherein the slew bearing (1) comprises multiple radial load sensors (14) for monitoring radial load distribution on the slew bearing (1) by measuring a distance through the slide ring (13), wherein the multiple radial load sensors (14) are distributed around the circumferential extension of the slew bearing (1) around the slew axis.
Clause 10. Slew bearing according to one or more of the preceding clauses, wherein the resilient insert (8) and/or the slide ring (13) are made of a composite material, e.g. a fiber reinforced plastic material.
Clause 11. Slew bearing according to one or more of the preceding clauses, wherein the rotary ring part (3) comprises a recess inside which the rotary raceway member (7) is contained.
Clause 12. Slew bearing according to one or more of the preceding clauses, wherein the stationary ring part (2) is provided with a second stationary raceway member (17) forming a second stationary raceway surface (16) that is oriented substantially perpendicular to the slew axis, and wherein the rotary ring part (3) is provided with a second rotary raceway member (18) forming a second rotary raceway surface (15),
   wherein rolling elements (9), e.g. rollers, are provided between the second stationary raceway member (16) and the second rotary raceway member (16),
   wherein the slew bearing (1) further comprises a second elastically compressible resilient insert (19), e.g. containing a plastic material, which is sandwiched between either the second rotary raceway member (18) and the rotary ring part (3), so that the rotary ring part (3) is resiliently supported on the rollers (9) via the second rotary raceway member(18) and the second resilient insert (19), or the stationary ring part (2) and the second stationary raceway member (15), so that the stationary ring part (2) is resiliently supported on the rollers (9) via the second resilient insert (19) and the second stationary raceway member (15).
Clause 13. Slew bearing according to one or more of the preceding clauses, wherein for supporting radially directed loads between the rotary ring part (3) and the stationary ring part (2), the slew bearing (1) further comprises a second elastically compressible resilient slide ring (22), e.g. containing a plastic material, mounted to either the rotary ring part (3) or the stationary ring part (2) and sliding along a stationary surface (20) of the stationary ring part (2) or along a rotary surface (21) of the rotary ring part (3).
Clause 14. Crane rotatably supported on a base (150) by a slew bearing (1) according to one or more of the clauses 1 - 13.
Clause 15. A backhoe dredger supported on a base (150) by a slew bearing (1) according to one or more of the clauses 1 - 13.
Clause 16. Vessel provided with a crane according to clause 14 or a backhoe dredger according to clause 15.
Clause 17. Method for hoisting an object (100) with a crane, wherein use is made of a vessel according to clause 16 or a crane according to clause 14.
Clause 18. Method according to clause 17, comprising:
   - hoisting an object (100) with the crane, e.g. mounted to the vessel;
   - monitoring the radial load and/or the axial load on the slew bearing (1) with the radial load sensor (10) and the axial load sensor (14); and
   - optionally, providing a warning signal when the axial load and/or the radial load exceeds a predetermined threshold value.

## Claims

1. Assembly for supporting an object, e.g. a pile gripper, on a rail whilst the object moves along the rail, wherein the assembly comprises a load bearing housing for carrying the object,
wherein the assembly comprises an endless chain of rolling elements, which are arranged for recirculating along a closed path around a raceway member (34) and a central body (35) of the assembly which central body (35) is attached to or integral with the load bearing housing, the path including:
- a work portion defined by a flat load bearing surface of the raceway member of the assembly, in which work portion an operative set of the rolling elements engages the rail, and
- a return portion defined by a return surface of the central body of the assembly in which a remaining set of the rolling elements is free from the rail, e.g. the return portion having a section which is parallel to the work portion,
wherein the assembly comprises an elastically compressible resilient insert (38), e.g. containing a plastic material, which resilient insert (38) is sandwiched between the central body (35) and the raceway member (34) above the work portion, so that the central body (35) is resiliently supported on the operative set of the rolling elements via the resilient insert (38) and the raceway member (34),
wherein the assembly further comprises a load sensor (40) for monitoring a load on the assembly by measuring a distance between the central body (35) and the raceway member (34) through the resilient insert (38), wherein the load sensor (40) is provided in the central body (35), e.g. opposite the raceway member (34) relative to the resilient insert (35), preferably wherein the resilient insert (38) is made of a composite material, e.g. a fiber reinforced plastic material.

2. Assembly according to claim 1, wherein the raceway member and/or the resilient insert are each embodied in the form of a plate, preferably wherein the raceway member has a smaller thickness than the raceway member, e.g. corresponding to around 55 - 65% of a thickness of the raceway member.

3. Assembly according to one or more of the preceding claims, wherein the central body comprises a recess inside which the resilient insert and the raceway element are contained and axially enclosed, e.g. such that the raceway element is flush with the longitudinally adjacent return surface of the central body.

4. Assembly according to one or more of the preceding claims, wherein at a front and rear side of the load bearing surface, the return surface runs upwardly directly from the load bearing surface, preferably wherein a frontmost and/or rearmost section of the raceway member slants slightly upwards towards the return surface.

5. Assembly according to one or more of the preceding claims, wherein the assembly further comprises a second endless chain of linear recirculating rolling elements, arranged for recirculating along a second closed path defined by the assembly, the two paths being laterally juxtaposed and parallel to one another, the second path including a work portion that is defined by a second load bearing surface of a second raceway member and in which an operative set of the rolling elements engages the rail, and a return portion that is defined by a second return surface of the central body and in which a remaining set of the rolling elements is free from the rail, wherein the central body is resiliently supported on the respective operative portions of the rolling elements of both endless chains via the respective raceway members, a elastically compressible resilient slide ring, e.g. containing a plastic material, being sandwiched between the central body and the second raceway member.

6. Assembly according to one or more of the preceding claims, wherein the housing is provided, at least around the work portion of the recirculating rolling elements, with one or more seals, e.g. between one or more bottom surfaces of the assembly, e.g. bottom surfaces of walls of the assembly, which together axially enclose the work portion, and the upper surface of the rail,
wherein the seals, e.g. together with the walls, define between the load bearing surface and the upper surface of the rail a grease chamber for the operative set of the recirculating rolling elements, e.g. wherein the seals are in a cross-section thereof substantially V-shaped.

7. Assembly according to one or more of the preceding claims, wherein the housing comprises a front and rear vertical end wall which extend laterally respectively at the front and rear side of the assembly, and a front and rear guide wall which are attached to respectively the front and rear end wall and define respectively a front and rear section of the return portion of the closed path opposite the return surface, e.g. wherein the attachment is established via one or more elongate mounting elements, e.g. one or more bolts, screws or similar, which extend perpendicularly through the end walls and longitudinally protrude into the guide walls.

8. Assembly according to one or more of the preceding claims, wherein the housing comprises a second front guide wall and a second rear guide wall, which are attached to respectively the front and rear end wall and define respectively a front and rear section of the return portion of the second closed path opposite the second return surface.

9. Assembly according to one or more of the preceding claims, wherein the housing further comprises a front and/or rear frame which protrude respectively from the front and/or rear end wall in a frontward and/or rearward direction, wherein the front and/or rear scraper is mounted underneath the respective frame at a longitudinal end thereof.

10. Assembly according to one or more of the preceding claims, wherein the rolling elements each rotate around a respective roller axis of which head ends run over respective treads formed by vertical protrusions from the central body extending longitudinally along the closed path at respective lateral sides of the closed path.

11. Assembly according to one or more of the preceding claims, wherein the assembly further comprises left upper and lower and right upper and lower longitudinal wall parts which form upper and lower vertical protrusions from the central body at the left and right ends thereof, and which extend longitudinally over at a least length of the closed path, e.g. wherein the left upper and lower longitudinal wall parts are interconnected, and the right upper and lower longitudinal wall parts are interconnected, via one or more elongate mounting elements, e.g. one or more bolts, screws or similar, which vertically extend inside the respective upper and lower longitudinal wall parts and through the respective lateral end of the central body, e.g. multiple elongate mounting elements being distributed longitudinally along the wall parts.

12. Assembly according to one or more of the preceding claims, wherein the assembly further comprises intermediate upper and lower longitudinal wall parts which form upper and lower vertical protrusions from the central body in between the two closed paths, and which extend longitudinally over at least a length of the closed path, e.g. wherein the intermediate upper and lower longitudinal wall parts are interconnected via one or more elongate mounting elements, e.g. one or more bolts, screws or similar, which vertically extend inside the respective upper and lower longitudinal wall parts and through a central part of the central body, e.g. multiple elongate mounting elements being distributed longitudinally along the wall parts, preferably wherein the longitudinal wall parts are connected to the end walls via one or more elongate mounting elements which extend perpendicularly through the end walls and longitudinally protrude into the longitudinal wall parts.

13. Assembly according to one or more of the preceding claims, wherein the assembly comprises multiple load sensors for monitoring a load on the assembly by measuring a distance between the central body and the raceway member, wherein the multiple axial load sensors are distributed on the central body.

14. Method for supporting an object, e.g. a pile gripper on a rail whilst the object moves along the rail wherein use is made of the assembly according to one or more of the claims 1 - 13.

15. Method according to claim 14, wherein the method comprises:
- monitoring a load on the resilient insert using the load sensor by measuring a local compression on the resilient insert by measuring the distance between the central body and the raceway member through the resilient insert.
